Europäisches Patentamt

European Patent Office

Office européen des brevets

(19)

(11) **EP 0 603 023 B1**

(12) **FASCICULE DE BREVET EUROPEEN**

(45) Date de publication et mention
de la délivrance du brevet:
**01.10.1997 Bulletin 1997/40**

(51) Int Cl.[6]: **G01V 1/36**

(21) Numéro de dépôt: **93402893.7**

(22) Date de dépôt: **30.11.1993**

(54) **Procédé de prospection en sismique marine**

Verfahren für meeresseismische Untersuchung

Process for marine seismic prospecting

(84) Etats contractants désignés:
**FR GB NL**

(30) Priorité: **02.12.1992 FR 9214507**

(43) Date de publication de la demande:
**22.06.1994 Bulletin 1994/25**

(73) Titulaire: **COMPAGNIE GENERALE DE
GEOPHYSIQUE
F-91300 Massy (FR)**

(72) Inventeur: **Manin, Michel
F-78730 Saint Mefme (FR)**

(74) Mandataire: **Martin, Jean-Jacques
Cabinet REGIMBEAU
26, Avenue Kléber
75116 Paris (FR)**

(56) Documents cités:
**WO-A-87/05404          US-A- 4 689 821**

- **GEOPHYSICS, vol.56, no.10, Octobre 1990,
  Tulsa US, pages 1677-1680; D.B. HARRIS et al.:
  'Seismic noise cancellation in a geothermal
  field'**
- **JOURNAL OF THE ACOUSTICAL SOCIETY OF
  AMERICA, vol.87, no.3, Mars 1990, New York US,
  pages 963-975; P.A. NELSON et al.: 'Active
  control of stationary random sound fields'**

## Description

La présente invention concerne la prospection géophysique à l'aide de méthodes sismiques en milieu marin, et plus particulièrement un procédé de prospection sismique visant à améliorer le rapport signal/bruit.

Le principe général de la prospection en sismique marine consiste à provoquer, à l'aide d'une source sismique, un ébranlement dans le milieu marin (par exemple par le dégagement d'un volume d'air ou de vapeur dans l'eau, la variation du volume d'un corps immergé, une implosion, une étincelle, etc...) et à enregistrer à l'aide de capteurs, constitués par des hydrophones remorqués par un navire de prospection ou par des géophones posés au fond de la mer, des données sismiques pour en tirer une information utile sur la géologie du sous-sol.

Les données sismiques comprennent une information utile (par exemple une succession d'échos en sismique réflexion) noyée dans un bruit de fond que l'on cherche à éliminer. Ce bruit de fond est engendré d'une part par des phénomènes naturels tels que la houle, les microséismes, qui présentent un caractère aléatoire non localisé et d'autre part provient de l'activité humaine on parle dans ce dernier cas de bruit industriel, qui présente en général un caractère localisé.

Dans cette dernière catégorie, le plus contraignant pour un premier navire de prospection est celui constitué par un ébranlement sismique provoqué par un deuxième navire prospectant sur le même site que lui, car il oblige le premier navire à travailler en «temps partagé" avec le deuxième.

On connaît par la publication GEOPHYSICS, vol. 56, N° 10, Octobre 1991, TULSA US, pages 1677-1680 un procédé de réduction de bruits industriels provoqués par l'exploitation de gisements pétroliers. Ce procédé, destiné à l'élimination d'un bruit industriel de spectre très différent de celui de la source utilisée pour la prospection, n'est pas approprié pour éliminer la perturbation due à un signal indésirable de spectre voisin de celui de la source utilisée pour prospecter, donc est inapplicable dans le cas de deux navires de prospection utilisant des sources sismiques générant des ébranlements de spectres semblables.

Faute de disposer d'un procédé d'élimination du bruit industriel satisfaisant pour traiter la perturbation créée par un autre navire de prospection, les navires prospectent à tour de rôle. La période d'inactivité pendant laquelle un navire de prospection ne peut effectuer aucune émission sismique se répercute bien entendu de façon significative sur le coût d'une campagne de prospection, rendant ainsi prohibitif le coût de la prospection dans des zones très fréquentées et riches en gisements telles que la Mer du Nord.

La présente invention a pour objet un procédé de prospection en sismique marine, destiné à permettre à deux navires au moins de prospecter simultanément sur un même site, ces navires provoquant chacun des ébranlements dans le milieu marin et enregistrant à l'aide de capteurs des traces sismiques contenant une information utile sur la géologie du sous-sol, un navire étant susceptible de constituer pour l'autre navire une source ponctuelle de bruit générant un signal indésirable venant masquer ladite information utile. Selon une caractéristique essentielle de l'invention, on localise dans l'espace cette source ponctuelle de bruit et l'on mémorise ses coordonnées spatiotemporelles ($X'(t)$, $Y'(t)$, $Z'(t)$) durant l'enregistrement, relativement à un repère dans lequel les coordonnées spatiotemporelles ($X_r(t)$, $Y_r(t)$, $Z_r(t)$) des capteurs sont également engistrées, puis on traite les traces sismiques enregistrées en fonction des coordonnées spatiotemporelles de la source ponctuelle de bruit en vue d'éliminer ledit signal indésirable. Chaque navire peut ainsi, en mettant en oeuvre le procédé selon l'invention, éliminer les signaux de bruit industriel indésirables correspondant aux tirs sismiques du ou des autres navires.

De préférence, lorsque la source ponctuelle de bruit industriel effectue des tirs impulsionnels dans le milieu marin de façon périodique avec à une certaine période, l'enregistrement des données sismiques a lieu de façon périodique avec une période choisie de sorte que l'écart entre les instants d'arrivée de deux tirs successifs soit supérieur à la durée d'un enregistrement.

Dans une première mise en oeuvre du procédé selon l'invention, on calcule, pour un capteur donné, à partir des coordonnées de la source ponctuelle et de celles de ce capteur, le temps d'arrivée à ce capteur du bruit émis par la source ponctuelle et l'on détermine à partir de ce temps d'arrivée une fenêtre temporelle pendant laquelle on atténue le signal délivré par le capteur.

Dans une deuxième mise en oeuvre du procédé selon l'invention, on applique à chacune des traces un décalage de temps $\Delta t_{kr}$, correspondant à l'écart de temps d'arrivée du bruit au capteur ayant servi à l'enregistrement de cette trace et au capteur ayant servi à l'enregistrement d'une trace de référence, de façon à simuler une arrivée synchrone du bruit sur les traces, on élimine le signal indésirable sur les traces ainsi décalées temporellement par un procédé d'élimination du bruit et l'on applique ensuite le décalage de temps inverse - $\Delta t_{kr}$ à chacune des traces débruitées.

Dans une troisième mise en oeuvre du procédé selon l'invention, on traite des groupes de traces, chaque groupe étant obtenu en regroupant les traces obtenues au moyen de capteurs éloignés d'un intervalle de distance donné de la source ponctuelle de bruit, cet intervalle de distance correspondant à un intervalle de temps de trajet déterminé du bruit, on effectue sur chaque trace de ce groupe donné un décalage de temps pour prendre comme nouvelle origine des temps l'instant du tir, ou un instant décalé de celui-ci d'un intervalle de temps constant, de la source ponctuelle de bruit venant perturber cette trace, on applique aux traces ainsi décalées temporellement un procédé d'élimination du bruit et l'on applique aux traces débruitées le décalage de temps inverse.

Un procédé d'élimination du bruit donnant satisfaction consiste à retrancher aux traces à traiter une trace particulière obtenue à partir de l'ensemble des traces à traiter. Cette trace particulière est obtenue par exemple en moyennant l'ensemble des traces à traiter. Le procédé d'élimination du bruit est avantageusement complété, avant l'étape consistant à retrancher à chaque trace à traiter ladite trace particulière, par un traitement additionnel consistant à définir une fenêtre de temps englobant le signal indésirable sur les traces à traiter, à choisir une trace de référence, à calculer dans cette fenêtre de temps pour chaque trace à traiter un opérateur inversible tel que celui-ci, convolué avec la trace considérée, donne la trace de référence. Après l'élimination sur les traces ayant subi cette opération de convolution dudit signal indésirable, par soustraction d'une trace particulière (obtenue en moyennant l'ensemble des traces comme précité ou par un autre procédé), on déconvolue les traces en utilisant l'opérateur inverse et l'on obtient des traces débruitées.

D'autres caractéristiques et avantages de la présente invention apparaîtront à la lecture de la description détaillée qui va suivre, de trois exemples non limitatifs de mise en oeuvre du procédé selon l'invention, et à l'examen du dessin annexé sur lequel:

- la figure 1 montre deux navires prospectant sur un même site,
- la figure 2 illustre une première mise en oeuvre du procédé selon l'invention,
- les figures 3 à 6 illustrent une deuxième mise en oeuvre du procédé selon l'invention,
- les figures 7 et 8 illustrent une troisième mise en oeuvre du procédé selon l'invention.

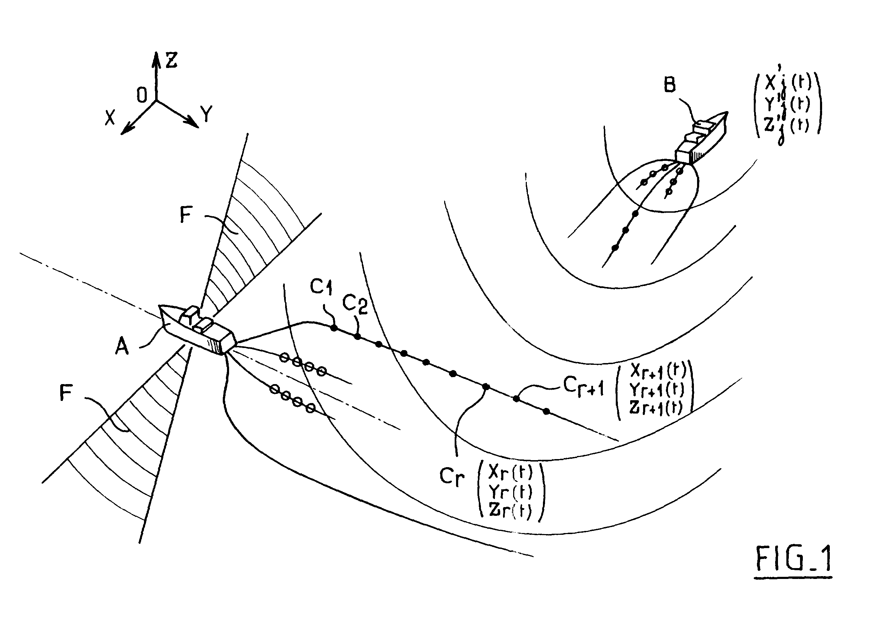

On a représenté sur la figure 1 deux navires de prospection A et B effectuant chacun des tirs impulsionnels dans le milieu marin et remorquant chacun des lignes de capteurs $C_r$ pour recevoir les échos des tirs impulsionnels réfléchis par les différentes structures géologiques du sous-sol. On supposera dans la suite que le navire B se comporte comme une source de bruit industriel ponctuel pour le navire A, les tirs impulsionnels effectués par le navire B venant perturber les traces sismiques enregistrées par les capteurs du navire A. Le trièdre (O, X, Y, Z) désigne sur la figure 1 un repère fixe dans lequel les capteurs $C_r$ du navire A ont pour coordonnées spatiotemporelles $X_r(t)$, $Y_r(t)$, $Z_r(t)$ et la source ponctuelle $X'(t)$, $Y'(t)$, $Z'(t)$. Les capteurs $C_r$ sont constitués dans l'exemple décrit par des hydrophones disposés dans un long tuyau rempli d'huile et remorqué par le navire. Le navire A comporte une source sismique non représentée également remorquée par le navire et il s'agit par exemple d'un canon à air, d'un canon à vapeur, d'un canon à eau ou encore d'un étinceleur, connus en eux-mêmes. On peut remplacer, sans sortir du cadre de l'invention, les hydrophones par des géophones posés au fond de la mer.

Conformément au procédé selon l'invention, la navire A localise le navire B et mémorise ses coordonnées spatiotemporelles, dans un repère tel que le trièdre de référence O, X, Y, Z où les coordonnées spatiotemporelles des capteurs $C_r$ sont également connues. On peut prendre un autre repère par exemple lié au navire A. Pour faciliter cette localisation, on dépose avantageusement sur le navire B une balise émettrice. Le navire A connaît avantageusement les instants $t_j'$ des tirs effectués par le navire B. On suppose dans la suite de la description que la source ponctuelle, c'est-à-dire le navire B de bruit industriel effectue des tirs impulsionnels dans le milieu marin avec une période $k_B$ donnée et que l'enregistrement des données sismiques par le navire A a lieu de façon périodique avec une période $k_A$.

Conformément à une première mise en oeuvre du procédé selon l'invention, on estime, pour un capteur $C_r$ donné, à partir des coordonnées de la source ponctuelle B et de celles de ce capteur, le temps d'arrivée $t_{ARRIVEE}$ à ce capteur $C_r$ du bruit émis par la source ponctuelle, et l'on détermine à partir de ce temps d'arrivée une fenêtre temporelle pendant laquelle on atténue le signal délivré par le capteur.

Pour calculer le temps d'arrivée $t_{ARRIVEE}$ d'un tir j effectué à l'instant $t_j'$ par le navire B à un capteur $C_r$ on dispose de la formule suivante :

$$t_{ARRIVEE} = t_j' + 1/V \left[ (X_r - X_j')^2 + (Y_r - Y_j')^2 + (Z_r - Z_j')^2 \right]^{1/2},$$

où $X_r$, $Y_r$, $Z_r$ désignent les coordonnées du capteur $C_r$, $X_j'$, $Y_j'$, $Z_j'$ désignent les coordonnées de la source ponctuelle à l'instant du tir j, et V désigne la vitesse de propagation des ondes sismiques dans le milieu marin, supposée ici constante dans un souci de clarté de l'exposé.

Connaissant le temps d'arrivée $t_{ARRIVEE}$ et la durée d du signal indésirable dû au tir j effectué à l'instant $t_j'$ par le navire B, on définit une fenêtre temporelle entre $t_{ARRIVEE}$ et $t_f = t_{ARRIVEE} + d$, pendant laquelle on atténue le signal délivré par le capteur $C_r$. En d'autres termes, on rend "aveugle" le capteur $C_r$ durant cette fenêtre temporelle.

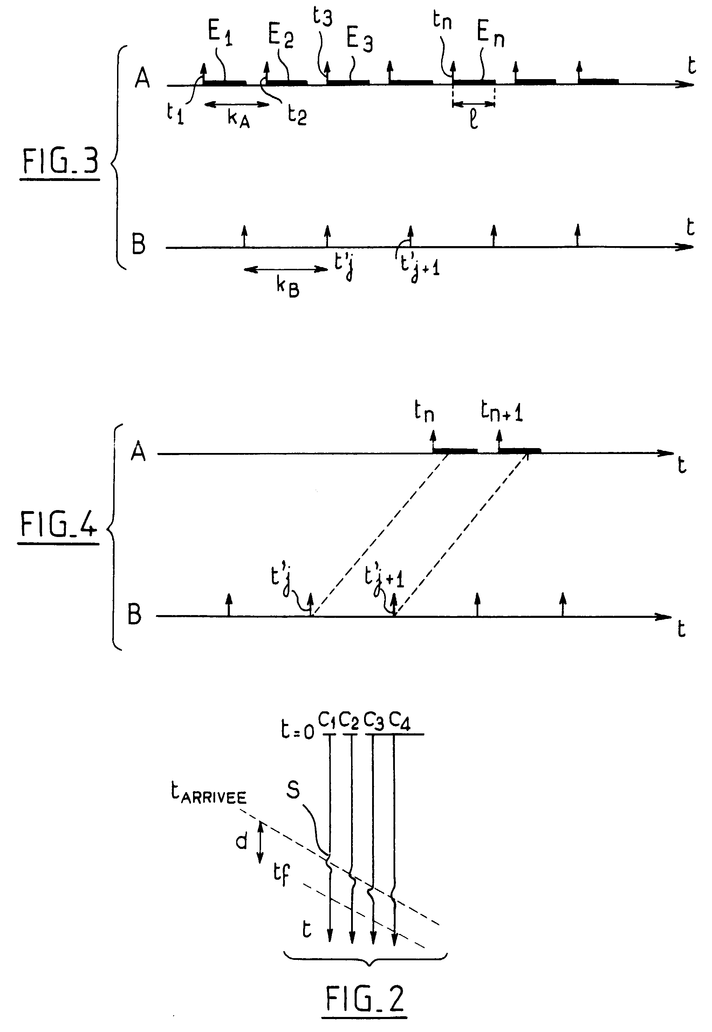

On a représenté sur la figure 2 à titre d'exemple quatre traces délivrées respectivement par quatre capteurs $C_1$, $C_2$, $C_3$ et $C_4$, perturbées par le tir j du navire B.

La première mise en oeuvre du procédé selon l'invention consiste à ne pas tenir compte, ou à tenir compte dans une moindre mesure (par exemple en atténuant l'amplitude d'un facteur 10 ou 100) de la partie de chaque trace contenue dans la fenêtre de temps entre $t_{ARRIVEE}$ et $t_f$, délimitée par deux lignes en pointillés parallèles sur la figure 2.

De préférence, la période $k_A$ est choisie de façon à éviter que les portions de traces atténuées correspondant à deux fenêtres de temps ayant pour origine les temps respectifs d'arrivée de deux tirs successifs ne se recouvrent. A titre indicatif, la durée du bruit provoqué par un tir est de l'ordre de 1 s.

Cette première mise en oeuvre de l'invention présente l'avantage d'utiliser un faible temps de calcul.

En revanche, on perd une partie de l'information utile contenue dans la fenêtre de temps pendant laquelle le signal est atténué.

La deuxième mise en oeuvre du procédé selon l'invention permet d'éviter cette perte d'information utile.

On a représenté sur les figures 3 et 4 sur un axe des temps une succession de tirs effectués par le navire A à des instants $t_1$, $t_2$, $t_3$, ... $t_n$, ... espacés de $k_A$, ces tirs étant suivis par des périodes d'enregistrement $E_1$, ... $E_n$ de durée $I$. On a représenté sur un axe des temps parallèle ayant la même origine de temps absolu les instants des tirs $t_j'$ du navire B, espacés de $k_B$. Chaque tir j effectué à l'instant $t_j'$ par le navire B provoque plus tard, compte tenu du temps de propagation dans le milieu marin, une perturbation sur un capteur donné $C_r$ du navire A, lors de l'enregistrement $E_n$ dans l'exemple de la figure 4. La même perturbation due au tir j arrive sur un autre capteur $C_k$ du navire A lors de l'enregistrement $E_n$ au temps $t_k$.

La deuxième mise en oeuvre du procédé selon l'invention comprend l'étape consistant à appliquer à la trace obtenue par le capteur $C_r$ un décalage $\Delta t_{kr}$, correspondant à l'écart de temps d'arrivée au capteur $C_r$ et au capteur $C_k$ du tir émis à l'instant $t_j'$ par le navire B.

Ce décalage de temps est donné par la formule :

$$\Delta t_{kr} = 1/V \left[(X_r - X_j')^2 + (Y_r - Y_j')^2 + (Z_r - Z_j')^2\right]^{1/2}$$

$$- 1/V \left[(X_k - X_j')^2 + (Y_k - Y_j')^2 + (Z_k - Z_j')^2\right]^{1/2}$$

où $X_r$, $Y_r$, $Z_r$ désignent les coordonnées du capteur $C_r$, $X_k$, $Y_k$, $Z_k$ désignent les coordonnées du capteur $C_k$, et $X_j'$, $Y_j'$, $Z_j'$ désignent les coordonnées de la source ponctuelle B au temps $t_j'$. On remarquera que cette deuxième mise en oeuvre du procédé permet de s'affranchir de la connaissance précise des instants de tir du navire B.

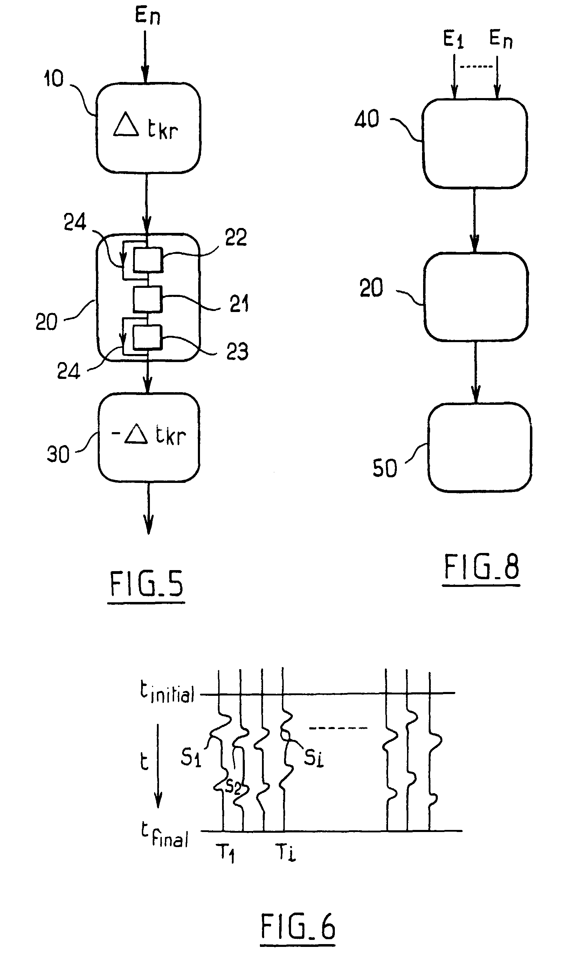

On applique ainsi à chacune des traces de l'enregistrement $E_n$ un décalage de temps $\Delta t_{kr}$, correspondant à l'écart de temps d'arrivée du bruit au capteur $C_r$ ayant servi à l'enregistrement de cette trace et à un capteur $C_k$ ayant servi à l'enregistrement d'une trace choisie pour servir de référence, de façon à simuler une arrivée synchrone du bruit sur toutes les traces. C'est ce que l'on a schématisé par l'étape 10 sur la figure 5. Le bruit dû au tir j du navire B apparaît alors sur les représentations habituelles temps - distance constituées par une forme de juxtaposition de traces sous la forme de lignes généralement horizontales : on parle d'"horizontalisation" du bruit.

Ensuite, on applique sur les traces décalées temporellement de $\Delta t_{kr}$ un procédé d'élimination du bruit, indiqué par l'étape 20 sur la figure 5, puis on effectue sur les traces débruitées le décalage inverse - $\Delta t_{kr}$, indiqué par l'étape 30, de façon à retrouver les données sismiques initiales de l'enregistrement $E_n$ sans le bruit.

Divers procédés d'élimination du bruit sur les traces décalées temporellement peuvent être utilisés.

Un premier procédé consiste à retrancher à chaque trace à traiter une trace particulière obtenue à partir de l'ensemble des traces à traiter. Il s'agit par exemple de la trace moyenne. On a indiqué la mise en oeuvre de ce procédé d'élimination par l'étape 21 sur la figure 5. Ce procédé peut être directement mis en oeuvre, ce que schématisent les flèches 24.

Ce procédé convient particulièrement bien lorsque l'arrivée du bruit sur les traces décalées a été parfaitement synchronisée (ce qui se traduit par des lignes horizontales parallèles entre elles et perpendiculaires à l'axe des temps sur les représentations traditionnelles temps - distance).

Il peut arriver dans la pratique, en raison par exemple de l'inhomogénéité du milieu marin et des fluctuations de la vitesse de propagation qui en résulte, que les signaux de bruits indésirables ne soient pas complètement synchrones sur les traces décalées, ce qu'on a représenté de façon schématique sur la figure 6. On voit sur cette figure une juxtaposition de traces $T_1$, ..., $T_i$ perturbées par des signaux indésirables $S_1$, $S_2$, ... $S_i$ non synchrones.

Dans ce cas, on effectue avantageusement, préalablement à l'étape 21 du procédé d'élimination du bruit une étape 22 et après l'étape 21, une étape 23. Ces étapes supplémentaires 22 et 23 sont appliquées facultativement pour de meilleurs résultats.

Le traitement additionnel correspondant aux étapes 22 et 23 repose sur le fait que le train de bruit dû au tir du navire B est fort, relativement long et stationnaire.

On définit dans l'étape 22, par la connaissance du temps d'arrivée $t_{ARRIVEE}$ du bruit aux capteurs $C_r$ du navire A une fenêtre de temps unique pour tous les capteurs englobant le bruit, et le traitement qui suit n'a lieu que dans cette fenêtre de temps $t_{initial}$, $t_{final}$ indiquée sur la figure 6.

On définit ensuite une trace de référence, qui peut être la trace d'un capteur, par exemple le capteur ayant servi à l'enregistrement de la trace $T_1$, ou encore toute trace particulière obtenue à partir des traces à traiter, par exemple une trace correspondant à la moyenne des traces $T_1$, ... $T_i$, ... Soit $T_{réf}$ cette trace de référence.

On calcule alors pour chaque trace $T_i$ un opérateur $D_i$ inversible tel que:

$$D_i * T_i = T_{réf},$$

où * désigne l'opération de convolution.

Le bruit étant stationnaire, l'opérateur $D_i$ est avantageusement simple et dans la pratique sera souvent limité à une combinaison d'opérateurs correspondant à un décalage de temps résiduel, un déphasage avec la trace de référence ou une multiplication par un scalaire.

En appliquant à chaque trace $T_i$ son opérateur $D_i$, toutes les traces deviennent identiques à la trace de référence $T_{réf}$ et le bruit parfaitement synchrone.

Le bruit est alors éliminé par l'étape 21. Après élimination du bruit, on déconvolue chaque trace en utilisant l'opérateur inverse $D_i^{-1}$ (étape 23) et l'on applique le décalage inverse $- \Delta t_{kr}$ (étape 30) pour retrouver les données sismiques initiales de l'enregistrement $E_n$ moins le bruit.

Cette deuxième mise en oeuvre du procédé selon l'invention est plus performante que la première dans la mesure où l'on ne perd pas d'informations utiles mais on doit veiller cependant à ce que le navire B ne se situe pas dans un secteur F particulier de part et d'autre du navire A, s'étendant à environ 15° autour de la perpendiculaire au profil sismique étudié par le navire A. Dans ce secteur particulier, les réflexions utiles et le bruit présentent dans la représentation temps - distance des fronts d'ondes parallèles, ce qui entraîne une perte d'information utile lors de la mise en oeuvre du procédé d'élimination du bruit précité.

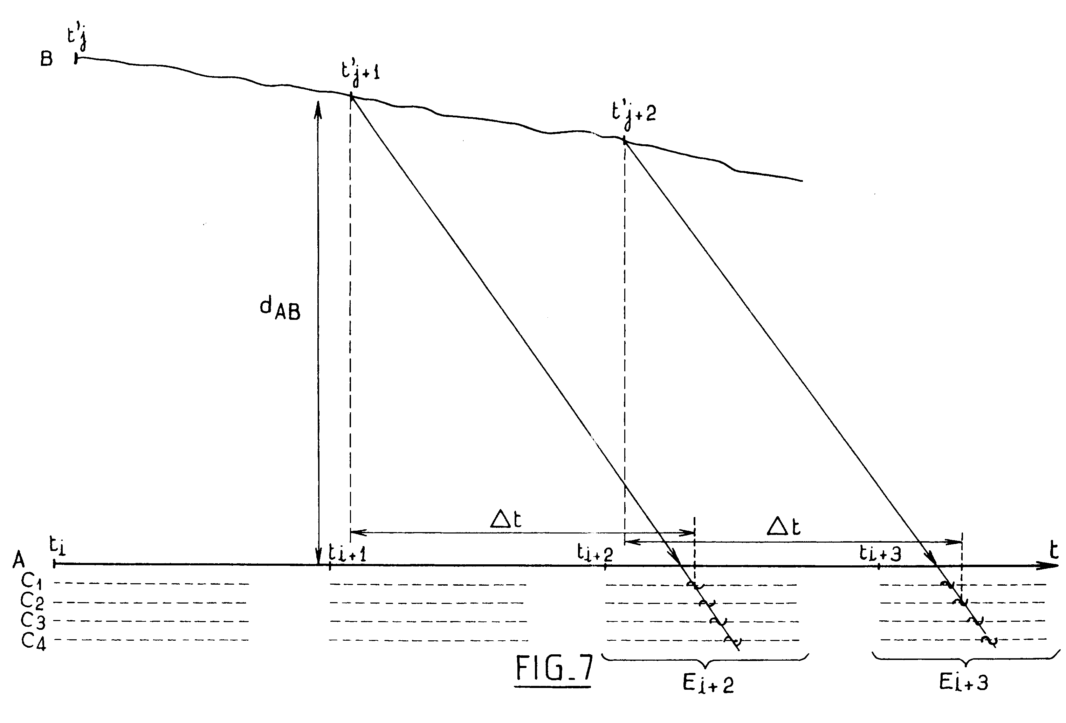

Une troisième mise en oeuvre de l'invention pallie à cet inconvénient et permet au navire A de prospecter indépendamment du positionnement relatif des navires A et B. On a représenté schématiquement sur la figure 7 la distance $d_{AB}$ entre les navires A et B au cours du temps, perpendiculairement à l'axe des temps. Le navire B effectue des tirs aux instants $t_j'$, $t_{j+1}'$, $t_{j+2}'$, etc... en se rapprochant du navire A qui effectue quant à lui des enregistrements aux instants $t_i$, $t_{i+1}$, $t_{i+2}$, ... au moyen de quatre capteurs $C_1$, ..., $C_4$. Le bruit dû au tir effectué à l'instant $t_{j+1}'$ vient perturber l'enregistrement débutant à l'instant $t_{i+2}$.

On a représenté schématiquement les différentes étapes de la troisième mise en oeuvre du procédé sur la figure 8. On commence (étape 40) par former des groupes de traces, chaque groupe étant obtenu en regroupant les traces obtenues au moyen de capteurs éloignés d'un intervalle de distance donné du navire B, cet intervalle de distance correspondant à un intervalle de temps de trajet déterminé $\Delta t$ du bruit. C'est le cas par exemple sur la figure 7 de la trace obtenue par le capteur $C_1$ durant l'enregistrement $E_{i+2}$ débutant à l'instant $t_{i+2}$ et par le capteur $C_2$ durant l'enregistrement $E_{i+3}$ débutant à l'instant $t_{i+3}$. On regroupe pour chaque groupe correspondant à un $\Delta t$ donné les traces des enregistrements successifs du navire A ayant suivi des tirs de ce dernier aux instants $t_{i+1}$, $t_{i+2}$, ..., telles que :

$$\Delta t < 1/V \, [(X_r - X_j')^2 + (Y_r - Y_j')^2 + (Z_r - Z_j')^2]^{1/2} < \Delta t + a,$$

où a désigne une constante de temps de préférence comprise entre 10 et 20 ms.

Ensuite, on effectue sur chacune des traces d'un groupe donné un décalage de temps pour prendre comme origine de temps sur cette trace l'instant du tir du navire B ayant perturbé cette trace (et non pas l'instant du tir du navire A ayant précédé l'enregistrement de cette trace), ou un instant différent de l'instant du tir mais décalé de celui-ci dans le temps d'un intervalle de temps constant.

L'arrivée du bruit est ainsi rendue synchrone sur les traces décalées temporellement pour prendre comme nouvelle origine des temps les instants des tirs du navire B ayant provoqués les perturbations et l'on peut appliquer aux traces ainsi décalées un procédé d'élimination du bruit tel que précédemment décrit, ce que l'on a schématisé par l'étape 20 suivant l'étape 40 sur la figure 7.

Ensuite, on applique aux traces débruitées le décalage inverse pour retrouver les données sismiques initiales sans le bruit (étape 50), avec comme origine des temps l'instant du tir du navire A ayant précédé leur enregistrement ( éventuellement un instant différent, décalé de l'instant du tir du navire A d'un intervalle de temps déterminé).

La troisième mise en oeuvre du procédé selon l'invention suppose que l'on connaisse les instants des tirs du navire B avec une précision suffisante, de préférence inférieure à 100 ms et avantageusement égale à 1 ms.

La notion de source ponctuelle doit être comprise de façon large. Deux sources ponctuelles légèrement écartées constitueront néanmoins une source ponctuelle au sens de l'invention si les écarts de temps de trajet au capteur utilisé sont inférieurs à 200 ms.

Dans une mise en oeuvre du procédé de prospection sismique selon l'invention, les navires qui prospectent sur un même site échangent en temps réel leurs coordonnées et les instants des tirs. Dans une autre mise en oeuvre du procédé de prospection sismique selon l'invention, les navires échangent a posteriori des informations sur leurs positions et les instants des tirs en fonction du temps absolu et le traitement des données sismiques en fonction de ces informations s'effectue en différé, sur le site ou dans un centre de calcul à terre.

## Revendications

1. Procédé de prospection en sismique marine destiné à permettre à deux navires (A, B) au moins de prospecter sur un même site, dans lequel les navires provoquent chacun des ébranlements dans le milieu marin et enregistrent à l'aide de capteur ($C_r$) des traces sismiques contenant une information utile sur la géologie du sous-sol, un navire (B) étant susceptible de constituer pour un autre navire (A) une source ponctuelle de bruit générant un signal présentant un spectre semblable à celui du signal recherché et masquant l'information utile, caractérisé en ce que, pour permettre aux deux navires une prospection simultanée sur ledit site, on localise dans l'espace cette source ponctuelle (B) de bruit et l'on mémorise ses coordonnées spatiotemporelles (X'(t), Y'(t), Z'(t)) durant l'enregistrement, relativement à un repère dans lequel les coordonnées spatiotemporelles ($X_r$(t), $Y_r$(t), $Z_r$(t)) des capteurs ($C_r$) sont également enregistrées, puis on traite les traces sismiques enregistrées en fonction des coordonnées spatiotemporelles de la source ponctuelle (B) de bruit en vue d'éliminer ledit signal indésirable.

2. Procédé selon la revendication 1, la source ponctuelle (B) de bruit industriel effectuant des tirs impulsionnels dans le milieu marin de façon périodique avec une période ($k_B$) donnée, caractérisé en ce que l'enregistrement des données sismiques a lieu de façon périodique avec une période ($k_A$) choisie de sorte que l'écart entre les instants d'arrivée de deux tirs successifs de la source ponctuelle est supérieur à la durée d'un enregistrement.

3. Procédé selon l'une des revendications 1 et 2, caractérisé en ce que l'on calcule, pour un capteur ($C_r$) donné, à partir des coordonnées de la source ponctuelle (B) et de celles de ce capteur, le temps d'arrivée à ce capteur du bruit émis par la source ponctuelle, et l'on détermine à partir de ce temps d'arrivée une fenêtre temporelle pendant laquelle on atténue le signal délivré par le capteur.

4. Procédé selon l'une des revendications 1 et 2, caractérisé en ce que l'on applique à chacune des traces un décalage de temps $\Delta t_{kr}$, correspondant à l'écart de temps d'arrivée du bruit au capteur ($C_r$) ayant servi à l'enregistrement de cette trace et au capteur ($C_k$) ayant servi à l'enregistrement d'une trace de référence, de façon à simuler une arrivée synchrone du bruit sur les traces, en ce que l'on élimine le signal indésirable sur les traces ainsi décalées temporellement par un procédé d'élimination du bruit et en ce que l'on applique ensuite le décalage de temps inverse - $\Delta t_{kr}$ à chacune des traces débruitées.

5. Procédé selon la revendication 4, caractérisé en ce que le décalage $\Delta t_{kr}$ pour une trace donnée est obtenu par la formule :

$$\Delta t_{kr} = 1/V \left[ (X_r - X_j')^2 + (Y_r - Y_j')^2 + (Z_r - Z_j')^2 \right]^{1/2}$$

$$- 1/V \left[ (X_k - X_j')^2 + (Y_k - Y_j')^2 + (Z_k - Z_j')^2 \right]^{1/2}$$

où $X_r$, $Y_r$, $Z_r$ désignent les coordonnées du capteur ($C_r$) ayant servi à l'enregistrement de cette trace, $X_j'$, $Y_j'$, $Z_j'$ désignent les coordonnées de la source ponctuelle ayant généré le signal indésirable et $X_k$, $Y_k$, $Z_k$ désignent les coordonnées du capteur($C_k$) ayant servi à l'enregistrement de la trace de référence.

6. Procédé selon l'une des revendications 1 et 2, caractérisé en ce que l'on traite des groupes de traces, chaque groupe étant obtenu en regroupant les traces obtenues au moyen de capteurs éloignés d'un intervalle de distance donné de la source ponctuelle (B) de bruit, cet intervalle de distance correspondant à un intervalle de temps de trajet déterminé du bruit, en ce que l'on effectue sur chaque trace de ce groupe donné un décalage de temps pour prendre comme nouvelle origine des temps l'instant du tir ou un instant décalé de celui-ci d'un intervalle de temps constant, de la source ponctuelle de bruit venant perturber cette trace, en ce que l'on applique aux traces ainsi décalées temporellement un procédé d'élimination du bruit et en ce que l'on applique aux traces débruitées le décalage de temps inverse.

7. Procédé selon l'une des revendications 4 à 6, caractérisé en ce que ledit procédé d'élimination du bruit comprend l'étape consistant à retrancher aux traces à traiter une trace particulière obtenue à partir de l'ensemble des traces à traiter.

**8.** Procédé selon la revendication 7, caractérisé en ce que ladite trace particulière est obtenue en moyennant l'ensemble des traces à traiter.

**9.** Procédé selon l'une des revendications 7 et 8, caractérisé en ce que le procédé d'élimination du bruit comprend en outre, avant l'étape consistant à retrancher à chaque trace à traiter ladite trace particulière, les étapes consistant à définir une fenêtre de temps englobant le signal indésirable sur les traces à traiter et à choisir une trace de référence, à calculer dans cette fenêtre de temps pour chaque trace à traiter un opérateur inversible tel que celui-ci, convolué avec la trace considérée, donne le signal de référence et, après avoir éliminé sur les traces ayant subi cette opération de convolution ledit signal indésirable, à déconvoluer les traces en utilisant l'opérateur inverse.

**10.** Procédé selon la revendication 9, caractérisé en ce que ledit opérateur inversible comprend l'une au moins des opérations dans la liste suivante : déphasage par rapport à la trace de référence, décalage de temps, multipication par un scalaire.

**11.** Procédé selon l'une des revendications 9 et 10, caractérisé en ce que la trace de référence est choisie dans la liste suivante : une trace choisie dans l'ensemble à traiter, une trace particulière obtenue à partir de l'ensemble des traces à traiter.

**12.** Enregistrement de données sismiques obtenu par le procédé selon l'une des revendications précédentes.

## Patentansprüche

**1.** Verfahren für eine seismische Meeresprospektion, welches dafür vorgesehen ist, es mindestens zwei Wasserfahrzeugen (A, B) zu gestatten, in demselben Gebiet zu prospektieren, und bei dem die Wasserfahrzeuge jeweils Erschütterungen in dem Meeresmilieu hervorrufen und mit Hilfe von Detektoren ($C_r$) seismische Spuren aufnehmen, welche eine nützliche Information über die Geologie des Untergrundes enthalten, wobei ein Wasserfahrzeug (B) für ein anderes Wasserfahrzeug (A) eine punktförmige Störsignalquelle bilden kann, die ein Signal erzeugt, welches ein ähnliches Spektrum wie das gesuchte Signal aufweist und die nützliche Information überdeckt, dadurch gekennzeichnet, daß man, um den zwei Wasserfahrzeugen eine gleichzeitige Prospektion in dem Gebiet zu ermöglichen, diese punktförmige Störsignalquelle (B) im Raum lokalisiert und ihre Raum/Zeit-Koordinaten ($X'(t)$, $Y'(t)$, $Z'(t)$) während der Aufzeichnung bezüglich eines Bezugssystems speichert, in dem die Raum/Zeit-Koordinaten ($X_r(t)$, $Y_r(t)$, $Z_r(t)$) der Detektoren ($C_r$) gleichfalls gespeichert sind, und man dann die aufgezeichneten seismischen Spuren in Abhängigkeit von den Raum/Zeit-Koordinaten der punktförmigen Störsignalquelle (B) zur Beseitigung des unerwünschten Signals behandelt.

**2.** Verfahren nach Anspruch 1, bei dem die punktförmige Quelle (B) von künstlichen Störsignalen impulsförmige Schüsse in dem Meeresmilieu periodisch mit einer gegebenen Periode ($k_B$) erzeugt, dadurch gekennzeichnet, daß die Aufzeichnung der seismischen Daten periodisch mit einer derart gewählten Periode ($k_A$) stattfindet, daß der Abstand zwischen den Zeitpunkten der Ankunft von zwei aufeinanderfolgenden Schüssen der punktförmigen Quelle größer als die Dauer einer Aufzeichnung ist.

**3.** Verfahren nach einem der Ansprüche 1 und 2, dadurch gekennzeichnet, daß man für einen gegebenen Detektor ($C_r$) ausgehend von den Koordinaten der punktförmigen Quelle (B) und denjenigen dieses Detektors die Ankunftszeit des von der punktförmigen Quelle ausgesendeten Störsignals bei diesem Detektor berechnet und man ausgehend von dieser Ankunftszeit ein Zeitfenster bestimmt, während dem man das von dem Detektor abgegebene Signal abschwächt.

**4.** Verfahren nach einem der Ansprüche 1 und 2, dadurch gekennzeichnet, daß man jede der Spuren einer Zeitversetzung $\Delta t_{kr}$, welche dem Abstand der Ankunftszeit des Störsignals bei dem Detektor ($C_r$), welcher zur Aufzeichnung dieser Spur gedient hat, und dem Detektor ($C_k$), der zum Aufzeichnen einer Referenzspur gedient hat, derart unterzieht, daß man eine synchrone Ankunft des Störsignals über den Spuren simuliert, daß man das unerwünschte Signal auf den so zeitlich versetzten Spuren durch ein Verfahren zum Beseitigen von Störsignalen beseitigt und daß man dann jede der von dem Störsignal befreiten Spuren einer inversen Zeitversetzung $-\Delta t_{kr}$ unterzieht.

**5.** Verfahren nach Anspruch 4, dadurch gekennzeichnet, daß die Versetzung $\Delta t_{kr}$ für eine gegebene Spur durch die

Gleichung

$$\Delta t_{kr} = 1/V \left[(X_r - X_j')^2 + (Y_r - Y_j')^2 + (Z_r - Z_j')^2\right]^{1/2}$$

$$- 1/V \left[(X_k - X_j')^2 + (Y_k - Y_j')^2 + (Z_k - Z_j')\right]^{1/2}$$

gegeben ist, wobei $X_r$, $Y_r$, $Z_r$ die Koordinaten des Detektors ($C_r$) bezeichnen, welcher zur Aufzeichnung dieser Spur gedient hat, $X_j'$, $Y_j'$, $Z_j'$ die Koordinaten der punktförmigen Quelle bezeichnen, welche das unerwünschte Signal erzeugt hat und $X_k$, $Y_k$, $Z_k$ die Koordinaten des Detektors ($C_k$) bezeichnen, der zur Aufzeichnung der Referenzspur gedient hat.

6. Verfahren nach einem der Ansprüche 1 und 2, dadurch gekennzeichnet, daß man Gruppen von Spuren verarbeitet, wobei jede Gruppe dadurch gewonnen wird, daß man die Spuren zusammenfaßt, die mit Hilfe von Detektoren gewonnen wurden, welche von der punktförmigen Störsignalquelle (B) um ein gegebenes Abstandsintervall entfernt sind, wobei dieses Abstandsintervall einem Intervall einer bestimmten Propagationszeit des Störsignals entspricht, daß man jede Spur dieser gegebenen Gruppe einer Zeitverschiebung unterzieht, um als neuen Zeitursprung den Zeitpunkt des Schusses der punktförmigen Störsignalquelle, welche diese Spur gestört hat, oder einen hierzu um ein konstantes Zeitintervall versetzten Zeitpunkt zu verwenden, daß man die so zeitverschobenen Spuren einem Störsignalbeseitigungsverfahren unterzieht und daß man die von Störsignalen befreiten Spuren einer inversen Zeitverschiebung unterzieht.

7. Verfahren nach einem der Ansprüche 4 bis 6, dadurch gekennzeichnet, daß das Verfahren zur Beseitung von Störsignalen den Schritt des Abziehens einer besonderen Spur, die man ausgehend von der Gesamtheit der zu verarbeitenden Spuren gewonnen hat, von den zu verarbeitenden Spuren umfaßt.

8. Verfahren nach Anspruch 7, dadurch gekennzeichnet, daß die besondere Spur durch Mittelung der Gesamtheit der zu verarbeitenden Spuren gewonnen wird.

9. Verfahren nach einem der Ansprüche 7 und 8, dadurch gekennzeichnet, daß das Verfahren zur Beseitigung von Störsignalen weiterhin vor dem Schritt des Abziehens der besonderen Spur von jeder zu verarbeitenden Spur die Schritte des Definierens eines Zeitfensters, welches das unerwünschte Signal einschließt, auf den zu verarbeitenden Spuren und des Wählens einer Referenzspur, des Berechnens eines invertierbaren Operators in diesem Zeitfenster für jede zu verarbeitende Spur derart, daß dieser, mit der jeweiligen Spur gefaltet, das Referenzsignal ergibt, und, nach dem Beseitigen des unerwünschten Signals auf den Spuren, welche dieser Faltungsoperation unterzogen worden sind, des Zurückfaltens der Spuren mit Hilfe des inversen Operatorts enthält.

10. Verfahren nach Anspruch 9, dadurch gekennzeichnet, daß der invertierbare Operator mindestens eine der Operationen aus der folgenden Liste enthält: Phasenverschiebung bezüglich der Referenzspur, Zeitverschiebung, Multiplikation mit einem Skalar.

11. Verfahren nach einem der Ansprüche 9 und 10, dadurch gekennzeichnet, daß die Referenzspur aus der folgenden Liste gewählt wird: eine ausgewählte Spur in dem zu verarbeitenden Ensemble, eine besondere, ausgehend von dem zu verarbeitenden Ensemble der Spuren gewonnene Spur.

12. Aufzeichnung von seismischen Daten, welche durch das Verfahren nach einem der vorangehenden Ansprüche gewonnen wurde.

## Claims

1. An off-shore seismic prospecting method for enabling at least two ships (A, B) to prospect over a single site, in which each of the ships generates disturbances in the off-shore environment and uses sensors ($C_r$) to record seismic traces containing useful information concerning the geology of the subsoil, a ship (B) being liable to constitute a point source of noise for another ship (A), which noise gives rise to signal presenting a similar spectrum to that of the desired signal and masking the useful information, the method being characterized in that to enable the two ships to prospect simultaneously over said site, said point source of noise (B) is localized in three dimensions and the space-time coordinates thereof [(X'(t), Y'(t), Z(t)] during the recording is stored in terms of a frame of reference in which the space-time coordinates $[(X_r(t), Y_r(t), Z_r(t)]$ of the sensors $(C_r)$ are also recorded, after which the recorded seismic traces are processed as a function of the space-time coordinates of the point source (B) of noise in order to eliminate said undesirable signal.

2. A method according to claim 1, in which the point source (B) of industrial noise fires pulse shots in the off-shore environment periodically at a given period $(k_B)$, the method being characterized in that the seismic data is recorded periodically at a period $(k_A)$ selected in such a manner that the difference between the arrival instants of two successive shots of the point source is greater than the duration of a seismic data recording.

3. A method according to claim 1 or 2, characterized in that for a given sensor $(C_r)$ and on the basis of the coordinates of the point source (B) and of said sensor, the arrival time at said sensor of the noise emitted by the point source is calculated, and a time window is determined on the basis of said arrival time, during which window the signal delivered by the sensor is attenuated.

4. A method according to claim 1 or 2, characterized in that a time shift $\Delta t_{kr}$ is applied to each of the traces, the time shift corresponding to the difference in arrival time of the noise at the sensor $(C_r)$ used for recording said trace and the sensor $(C_k)$ used for recording a reference trace, so as to simulate synchronous arrival of the noise in the traces, in that a noise-elimination method is used to eliminate the undesirable signal from the traces that have been time-shifted in this way, and in that the inverse time shift $-\Delta t_{kr}$ is then applied to each of the denoised traces.

5. A method according to claim 4, characterized in that the shift $\Delta t_{kr}$ for a given trace is obtained by the equation:

$$\Delta t_{kr} = (1/V)\sqrt{[(X_r - X_j')^2 + (Y_r - Y_j')^2 + (Z_r - Z_j')^2]}$$

$$- (1/V)\sqrt{[(X_k - X_j')^2 + (Y_k - Y_j')^2 + (Z_k - Z_j')^2]}$$

where: $X_r, Y_r, Z_r$ designate the coordinates of the sensor $(C_r)$ used for recording said trace; $X_j', Y_j',$ and $Z_j'$ designate the coordinates of the point source that generated the undesirable signals; and $X_k, Y_k,$ and $Z_k$ designate the co-ordinates of the sensor $(C_k)$ used for recording the reference trace.

6. A method according to claim 1 or 2, characterized in that traces are processed in groups, each group being obtained by grouping together traces obtained by means of sensors that are remote from the point noise source (B) by a given distance interval, said distance interval corresponding to a determined travel time interval of the noise, in that a time shift is applied to each trace in a given group so as to give the traces a new time origin constituted by the firing instant of the point noise source that disturbs said traces, which instant may optionally be offset by a constant time offset, in that the traces time shifted in this way are subjected to a noise elimination method, and in that the inverse time shift is applied to the denoised traces.

7. A method according to any one of claims 4 to 6, characterized in that said noise elimination method includes a step that consists in subtracting a special trace obtained from all of the traces to be processed from each of the traces to be processed.

8. A method according to claim 7, characterized in that said special trace is obtained by averaging the set of traces to be processed.

9. A method according to claim 7 or 8, characterized in that the method of eliminating noise further comprises, prior to the step of subtracting said special trace from each of the traces to be processed, the steps consisting in defining a time window that covers the undesirable signal in all of the traces to be processed and in selecting a reference trace, in calculating an invertible operator within said time window for each of the traces to be processed, the operator being such that when convoluted with the trace in question it generates the reference signal, and after eliminating said undesirable signal from the traces that have been subjected to said convolution operation, in deconvoluting the traces by using the inverse operator.

10. A method according to claim 9, characterized in that said invertible operator comprises at least one of the operations in the following list: phase shifting relative to the reference trace; time shifting; multiplication by a scalar.

11. A method according to claim 9 or 10, characterized in that the reference trace is selected from the following list:

a trace selected from the set of traces to be processed; and a special trace obtained from the set of traces to be processed.

12. A recording of seismic data obtained by the method of any preceding claim.

FIG_1

$$\begin{pmatrix} X'_i(t) \\ Y'_i(t) \\ Z'_i(t) \end{pmatrix}$$

$$C_{r+1} \begin{pmatrix} X_{r+1}(t) \\ Y_{r+1}(t) \\ Z_{r+1}(t) \end{pmatrix}$$

$$C_r \begin{pmatrix} X_r(t) \\ Y_r(t) \\ Z_r(t) \end{pmatrix}$$

FIG.3

FIG.4

FIG.2

En

10  △ tkr

24  22
20  21
24  23

30  -△ tkr

**FIG.5**

E₁  Eₙ

40

20

50

**FIG.8**

t_initial

t  S₁  Sᵢ
S₂

t_final  T₁  Tᵢ

**FIG.6**

13

FIG. 7

EP 0 603 023 B1